# EUROPÄISCHE PATENTANMELDUNG

(11) **EP 4 733 603 A1**
(43) Veröffentlichungstag der Anmeldung: **29.04.2026**
(21) Anmeldenummer: 25210171.2
(22) Anmeldetag: 21.10.2025
(51) Int. Cl.: F15B 13/01, F15B 13/02, F15B 20/00, F15B 13/04, F16K 15/02

(54) **RÜCKSCHLAGVENTIL**

(30) Priorität: 24.10.2024 DE 102024003498
(71) Anmelder: Hydac Mobilhydraulik GmbH, Sulzbach/Saar (DE)
(72) Erfinder: Bär, Harald, 66346 Püttlingen (DE); Riechers, Frederic, 66119 Saarbrücken (DE)
(74) Vertreter: Bartels und Partner, Patentanwälte

(57) **Zusammenfassung**

1. Rückschlagventil
2. Rückschlagventil, insbesondere entsperrbares Rückschlagventil (10), mit einem Vorsteuerteil (12) und mit einem Aufsteuerteil (14), das von dem Vorsteuerteil (12) aufsteuerbar ist, dadurch gekennzeichnet, dass mindestens ein leckölführender Raum (16) auf Seiten des Vorsteuerteils (12) fluidführend an eine Speichereinrichtung (20) anschließbar ist, die eine vorgebbare Menge an Lecköl aufnimmt, das im Betrieb entsteht.

## Beschreibung

Die Erfindung betrifft ein Rückschlagventil, insbesondere ein entsperrbares Rückschlagventil, mit einem Vorsteuerteil und mit einem Aufsteuerteil, das vom Vorsteuerteil aufsteuerbar ist.

Hydraulisch entsperrbare Rückschlagventile sind bekannt und werden beispielsweise benötigt, wenn ein belasteter Hydraulikzylinder in einer bestimmten Lage gehalten oder hydraulisch eingespannt werden soll. Das Entsperren des Rückschlagventils wird zumeist durch ein Wegeventil gesteuert, über das auch die Bewegung des Hydraulikzylinders bestimmt wird. Die allgemein bekannten hydraulisch entsperrbaren Rückschlagventile ermöglichen in einer Durchflussrichtung, in der das Rückschlagventil öffnet, den praktisch ungehinderten Durchfluss. In der Gegenrichtung wiederum sperrt das Rückschlagventil, wenn nicht durch Beaufschlagung eines Entsperrkolbens die durch den auf den Rückschlagventilkörper wirkenden Druck ausgeübte Kraft überwunden und das Rückschlagventil dadurch geöffnet respektive entsperrt wird. In diesem Zusammenhang ist in der deutschen Offenlegungsschrift 24 45 699 folgendes Problem beschrieben: Wird beim Absenken eines statisch belasteten, doppeltwirkenden Zylinders die Senkgeschwindigkeit derart groß, dass die auf der anderen Seite des Kolbens zur Aufrechterhaltung des Öffnungsdruckes für das entsperrbare Rückschlagventil erforderliche Hydraulikflüssigkeitsmenge von der Pumpe nicht mehr aufgebracht werden kann, so schließt das Rückschlagventil kurzzeitig, wird gleich wieder aufgestoßen, schließt wieder und so fort. Demgemäß erfolgt das Absenken ruckartig in stotternder Weise und die damit einhergehenden Stöße können zu Schäden im System führen.

Zur Lösung dieses Problems wird vorgeschlagen, ein hydraulisch entsperrbares Rückschlagventil mit einem Entsperrkolben, dessen Schaft kraftschlüssig auf einen federbelasteten Ventilkörper öffnend einwirkt, derart auszugestalten, dass der Schaft mit einem oder mehreren Abstufungen versehen ist, die mit einer dem Ventilkörper zugeordneten Durchflussbohrung eines Ventilsitzes einen den Rückfluss hemmenden Drosselspalt bilden durch den die Senkgeschwindigkeit begrenzt werden kann. Derart sind ruckartige Absenkvorgänge ausgeschlossen.

Durch EP 0 054 722 A1 ist ein entsperrbares Rückschlagventil für druckmittelbetätigte Spannzylinder bekannt, das aus einem Steuerkolben und einer Dichtung besteht, die axial verschiebbar angeordnet ist oder eine abstehende radial oder axial bewegbare Dichtlippe aufweist, die mit einer an dem beidseitig von Druckmittel beaufschlagbaren Steuerkolben oder dem diesen aufnehmenden Gehäuse bzw. einer sonst an einem eingesetzten Zwischenstück vorgesehenen Dichtfläche zusammenwirkt. Ferner ist eine Aussparung vorgesehen, in die zu einer Entlüftung eines Druckraumes in die Umgebung die Dichtung bzw. die Dichtlippe durch eine Verschiebung des Steuerkolbens einführbar ist. Dergestalt ist gewährleistet, dass unmittelbar nach Beendigung einer Druckmittelzuführung eine sichere Abdichtung gegeben ist. Durch übliche Leckölverluste in den Zuführungsleitungen wird somit der Druck in dem Druckraum nicht abgesenkt und der aufgebaute Druck bleibt stets erhalten, was zur Erhöhung der Betriebssicherheit mit beiträgt.

Durch EP 3 067 604 B1 ist ein Rückschlagventil, insbesondere in Form eines direkt gesteuerten, federbelasteten Kegelsitzventiles bekannt, mit einem Ventilkolben, der in einem Ventilgehäuse mit einem Ventilsitz längsverfahrbar geführt ist und der entgegen der Wirkung eines Energiespeichers in verschiedenen Schaltstellungen den fluidführenden Weg zwischen zwei Anschlussstellen im Ventilgehäuse durch Abheben vom Ventilsitz oder durch Anlegen an den Ventilsitz freigibt bzw. voneinander separiert, wobei mittels einer Überwachungseinrichtung die einzelnen Schaltstellungen des Ventilkolbens im Ventilgehäuse überwacht sind, was es erlaubt, nur bei einem tatsächlichen detektierten Ausfall solcher Rückschlagventile gefahrbringende Maschinen- und Anlagenteile außer Funktion zu setzen.

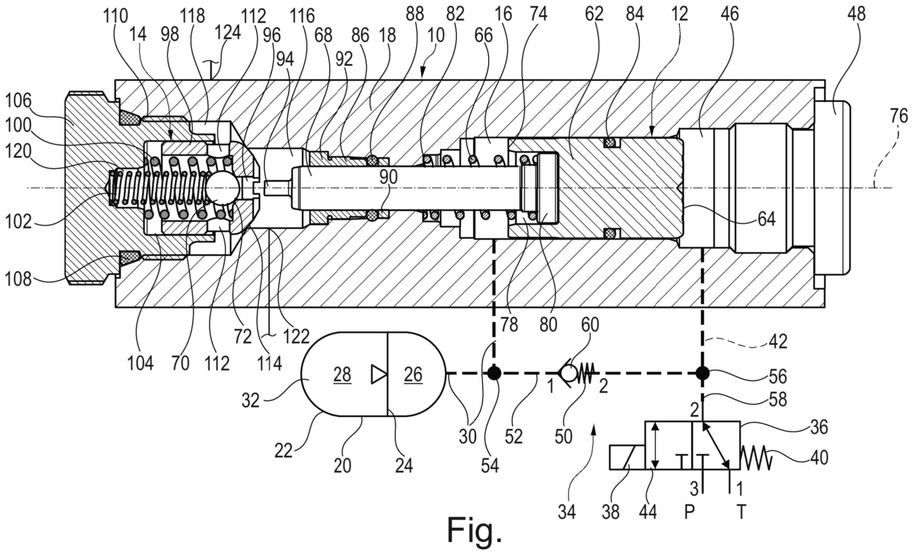

Figur 4 von EP 3 067 604 B1 zeigt unmittelbar ein hydraulisch entsperrbares Rückschlagventil mit einem Vorsteuerteil und mit einem Aufsteuerteil auf, das von dem Vorsteuerteil aufsteuerbar ist. Kommen hydraulisch entsperrbare Rückschlagventile in hydraulischen Versorgungskreisläufen zum Einsatz, bei denen beispielsweise ein hydraulischer Verbraucher, wie ein Hydromotor oder ein Hydraulikzylinder, von einer zentralen Druckversorgungseinrichtung zu versorgen und anzusteuern ist, kann nicht ausgeschlossen werden, dass mit Aufsteuern des Aufsteuerteils durch das Vorsteuerteil auf einer zugehörigen Ablaufseite der hydraulischen Versorgung sich derart ein Drosseldruck aufbaut, dass das Rückschlagventil ungewollt wieder zugesteuert wird und ein Betätigen des jeweiligen hydraulischen Verbrauchers unterbleibt. Zur Vermeidung dieses Problems zum Einsatz kommende Entlüftungen und/oder Leckölabführungen sind in der Praxis nicht immer gewollt, da sie zum einen das Ansteuerverhalten des Rückschlagventils nachteilig beeinflussen können und zum anderen ein Medienaustrag in die Umgebung stattfindet, sei es in Form von mit Schmiermittel belasteter Luft, sei es in Form von Lecköl, was die Umwelt belastet.

Ausgehend von diesem Stand der Technik liegt der Erfindung die Aufgabe zugrunde, die bekannten hydraulisch entsperrbaren Rückschlagventile dahingehend zu verbessern.

Eine dahingehende Aufgabe löst ein Rückschlagventil mit den Merkmalen des Patentanspruches 1 in seiner Gesamtheit. Dadurch, dass gemäß dem kennzeichnenden Teil des Patentanspruches 1 mindestens ein leckölführender Raum auf Seiten des Vorsteuerteils fluidführend an eine Speichereinrichtung angeschlossen ist, die eine vorgebbare Menge an Lecköl aufnimmt, das im Betrieb entsteht, ist eine Art Volumenausgleichseinrichtung geschaffen, die ohne die sperrende oder freigebende Funktion des Rückschlagventils zu beeinträchtigen, sicherstellt, dass nach außen hin kein offenes System entsteht, über das umweltkritische Substanzen, wie Lecköl, ausgetragen werden. Die Speichereinrichtung nebst zugehöriger Ventilsteuerung kann integraler Bestandteil des Rückschlagventils sein, beispielsweise weil diese ein gemeinsames Vorrichtungsgehäuse miteinander teilen; es besteht aber auch die Möglichkeit eine Vorrichtung oder ein System zu bilden, insbesondere mit den einzelnen Komponenten Rückschlagventil und Speichereinrichtung.

Bei einer bevorzugten Ausführungsform des erfindungsgemäßen Rückschlagventils ist vorgesehen, dass das Vorsteuerteil von dem Aufsteuerteil mittels einer Dichteinrichtung fluiddicht separiert ist, und dass die Fluidanschlüsse einer Fluidführung für das Aufsteuerteil von einer weiteren Fluidführung mit einer Fluidleitung separiert sind, die den leckölführenden Raum des Vorsteuerteils mit der Speichereinrichtung fluidführend verbindet. Derart ist von der Fluidführung her das Aufsteuerteil vollständig von dem Vorsteuerteil entkoppelt, was der Funktionssicherheit insgesamt zugutekommt.

Bei einer weiteren bevorzugten Ausführungsform des erfindungsgemäßen Rückschlagventils ist vorgesehen, dass der leckölführende Raum von einer Betätigungsstange durchgriffen ist, die in Anlage mit der Dichteinrichtung ist und die an ihren freien Stirnseiten mit dem Aufsteuerteil zusammenwirkt sowie mit einem Vorsteuerkolben des Vorsteuerteils. Vorzugsweise ist dabei weiter vorgesehen, dass der leckölführende Raum in Abhängigkeit von der jeweiligen Zustellbewegung des Vorsteuerkolbens vom Volumen her veränderlich ist und außenumfangsseitig von einem Ventilgehäuse umfasst ist, in dem der Ventilkolben nebst der Betätigungsstange längsverfahrbar geführt sind. Dergestalt ist eine Funktionskopplung zwischen Aufsteuerteil und dem Vorsteuerteil mit seinem Vorsteuerkolben unter Zwischenschalten des leckölführenden Raumes geschaffen.

Bei einer weiteren bevorzugten Ausführungsform des erfindungsgemäßen Vorrichtung ist vorgesehen, dass die Fluidleitung derart an den leckölführenden Raum angeschlossen ist, dass in jeder Verfahrstellung des Vorsteuerkolbens permanent eine, vorzugsweise voll geöffnete Fluidverbindung zwischen dem leckölführenden Raum und der Speichereinrichtung besteht. Dergestalt ist eine fortlaufende Funktionsanbindung zwischen leckölführendem Raum und der Speichereinrichtung geschaffen.

Bei einer bevorzugten Ausführungsform des erfindungsgemäßen Rückschlagventils ist vorgesehen, dass die Speichereinrichtung aus mindestens einem Hydrospeicher gebildet ist, der ein Trennelement aufweist, das eine Fluidseite mit dem Lecköl von einer Energiespeicherseite separiert. Dergestalt bildet die Speichereinrichtung zusammen mit dem Rückschlagventil ein gegenüber der Umgebung betreffend die Leckölaufnahme abgeschlossenes System aus, das sicherstellt, dass Lecköl nicht ungewollt in die Umgebung entweichen kann.

Bei einer weiteren bevorzugten Ausführungsform des erfindungsgemäßen Rückschlagventils ist vorgesehen, dass der Energiespeicher eine mechanische Feder und/oder eine Gasfeder ist, insbesondere in Form eines im Hydrospeicher auf seiner Energiespeicherseite vorgespannten Arbeitsgases.

Dabei ist die Steifigkeit der jeweils im Hydrospeicher zum Einsatz kommenden Feder gering gewählt. Dergestalt bildet der Hydrospeicher bei geringer Vorspannung im Wesentlichen eine Volumenausgleichseinrichtung aus, die eine ungehinderte, hemmnisfreie Aufnahme des Lecköls aus Bereichen des Rückschlagventiles sicherstellt.

Bei einer weiteren bevorzugten Ausführungsform des erfindungsgemäßen Rückschlagventils ist vorgesehen, dass die Fluidseite der Speichereinrichtung mittels einer Ventileinrichtung auf Tankdruck schaltbar ist, insbesondere zum Entleeren des Lecköls auf der Fluidseite der Speichereinrichtung in Richtung eines Vorratstanks. Vorzugsweise ist dabei vorgesehen, dass die Ventileinrichtung ein erstes Steuerventil, insbesondere in Form eines 3/2-Wegeventiles, aufweist, das in einer Schaltstellung das Vorsteuerteil mit Fluid vorgebbaren Druckes versorgt und in einer weiteren Schaltstellung den Leckölfluss zum Vorratstank herstellt, sobald ein zweites Steuerventil, insbesondere in Form eines federbelasteten weiteren Rückschlagventils, in Richtung des ersten Steuerventils öffnet. Besonders bevorzugt ist dabei weiter vorgesehen, dass das zweite Steuerventil in einen Abzweig geschaltet ist zwischen einem Fluidzulauf für das Vorsteuerteil und einem Fluidablauf für das Lecköl. Dergestalt ist in Abhängigkeit des Betriebszustandes ein ungestörtes Entleeren der Speichereinrichtung respektive des Hydrospeichers in das Fluidversorgungssystem in Richtung des Vorratstanks ermöglicht. Des Weiteren stellt das zweite Steuerventil, das als federbelastetes Rückschlagventil konzipiert in Richtung der Speichereinrichtung schließt, sicher, dass bei einer Druckbeaufschlagung des Vorsteuerteils zum Aufsteuern des Aufsteuerteils nicht ungewollt Fluid mit entsprechendem Betriebsdruck auf die Leckölseite des Rückschlagventils gelangen kann, was ansonsten einen Gegendruck ausübend zum Ausfall desselben führen könnte.

Bei einer weiteren bevorzugten Ausführungsform des erfindungsgemäßen Rückschlagventils ist vorgesehen, dass das Vorsteuerteil einen Vorsteuerkolben aufweist, der mit Druck auf einer seiner beiden Seiten beaufschlagt entgegen der Wirkung eines weiteren Energiespeichers, insbesondere einer Rückstellfeder, über eine Betätigungsstange, die den leckölführenden Raum im Ventilgehäuse durchfährt, ein federbelastetes Schließteil des Aufsteuerteils, insbesondere in Kugelform, von seinem Ventilsitz abhebt und dabei mit seiner anderen Seite das vorhandene Lecköl im leckölführenden Raum des Vorsteuerteils in Richtung der Fluidseite der Speichereinrichtung ausschiebt. Vorzugsweise ist dabei des Weiteren vorgesehen, dass mit Abheben des Schließteiles von seinem Ventilsitz ein in einer Ventilkammer des Aufsteuerteiles mit der Betätigungsstange vorhandener Fluiddruck auf die Rückseite eines Ventilkolbens gelangt, der das federbelastete Schließteil aufnimmt und der entgegen der Rückstellkraft eines zusätzlichen Energiespeichers, insbesondere in Form einer weiteren Rückstellfeder, in seine Freigabestellung gebracht den Fluidweg von einem Fluidanschluss, der in die eine Ventilkammer ausmündet, zu einem weiteren Fluidanschluss freigibt, der in eine weitere Ventilkammer des Aufsteuerteils ausmündet. Bevorzugt ist ferner vorgesehen, dass die Betätigungsstange innerhalb des Ventilgehäuses in einer Führungsbuchse geführt ist, die den leckölführenden Raum des Vorsteuerventils von der einen Ventilkammer des Aufsteuerteils in abgedichteter Weise trennt, die an den einen Fluidanschluss angeschlossen ist. Dergestalt ist eine Art Vorsteuerung für das Aufsteuerteil des Rückschlagventiles erreicht, so dass erst nach Aufsteuern des federbelasteten Schließteils mittels des Vorsteuerteils die Hauptstufe in Form des eigentlichen Ventilkolbens öffnet und die Fluidverbindung zwischen zwei benachbarten Fluid- oder Ventilkammern freigibt, die entsprechend über Fluidanschlüsse im Ventilgehäuse an Zu- und Ablaufleitungen eines hydraulischen Arbeitskreises angeschlossen sind, die zu einem hydraulischen Verbraucher, wie einem Hydromotor oder einem hydraulischen Arbeitszylinder, führen können.

Im Folgenden ist das erfindungsgemäße Rückschlagventil anhand eines Ausführungsbeispieles nach der Zeichnung näher erläutert. Dabei zeigt in prinzipieller und nicht maßstäblicher Darstellung die einzige
- Figur: in der Art eines Längsschnittes die wesentlichen Komponenten des Rückschlagventils nebst zugehörigen Anbauteilen.

Die Figur zeigt insbesondere ein Rückschlagventil in Form eines entsperrbaren Rückschlagventils 10, das ein Vorsteuerteil 12 sowie ein Aufsteuerteil 14 aufweist, das von dem Vorsteuerteil 12 aufsteuerbar ist. Auf Seiten des Vorsteuerteiles 12 ist ein leckölführender Raum 16 in einem Ventilgehäuse 18 vorhanden, der fluidführend an eine Speichereinrichtung 20 anschließbar respektive angeschlossen ist, die eine vorgebbare Menge an Lecköl aufnehmen kann, welches im Betrieb des Rückschlagventiles 10 entsteht.

Die Speichereinrichtung 20 ist aus einem Hydrospeicher 22 gebildet, der ein Trennelement 24 aufweist, das eine Fluidseite 26 des Speichers 22 mit dem bevorrateten Lecköl von einer Energiespeicherseite 28 separiert. Eine dahingehende Speichereinrichtung 20 in Form eines Hydrospeichers 22 ist Stand der Technik und in einer Vielzahl von Ausführungsformen frei auf dem Markt erhältlich, so dass insoweit der in der Figur symbolisch dargestellte Speicher 22 in der Art eines Platzhalters an die Stelle einer Vielzahl von Hydrospeicherkonstruktionen treten kann. Wie sich weiter aus der Figur ergibt, ist die Fluid- oder Flüssigkeitsseite 26 des Hydrospeichers 22 über eine strichliniert dargestellte Fluidleitung 30 mit randseitigem Durchgreifen des Ventilgehäuses 18 medien- oder fluidführend mit dem leckölführenden Raum 16 verbunden. Des Weiteren weist der Hydrospeicher 22 als Energiespeicher auf seiner Energiespeicherseite 28 ein vorgespanntes Arbeitsgas 32 auf, beispielsweise in Form von Stickstoffgas, wobei die Niveaulage oder Füllstandshöhe auf der Fluidseite 26 des Speichers 22 mit einem Dreieckssymbol angedeutet ist. Das Arbeitsgas 32 bildet insoweit eine Art Gasfeder aus, deren Steifigkeit jedoch ausgesprochen gering gewählt ist, um im Betrieb des Rückschlagventiles 10 einen hemmnisfreien Austrag von Lecköl aus dem Raum 16 in den Speicher 22 ermöglichen zu können.

Die Fluidseite 26 des Speichers lässt sich mittels einer Ventileinrichtung 34 als Ganzes auf Tankdruck T schalten und dient insbesondere dem Entleeren des Lecköls auf der Fluidseite 26 der Speichereinrichtung 20 in Richtung eines Vorratstanks (nicht dargestellt), der Tankdruck aufweist und der an der mit T bezeichneten Stelle in der Figur an die eingangsseitige Anschlussstelle 1 eines 3/2-Wegeventiles 36 angeschlossen ist. Das Wegeventil 36 ist mittels seines zugehörigen Magneten 38 betätigbar und wird bei nichtbestromtem Magneten 38 von einer Rückstellfeder 40 in seine, in der Figur gezeigte Ausgangsstellung rückgestellt. In der betätigten Stellung des Wegeventiles 36 wird hingegen eine Druckversorgungseinheit (nicht dargestellt) in Richtung des Anschlusses P, beispielsweise in Form einer Hydropumpe, an eine strichliniert dargestellte Versorgungsleitung 42 in üblicher Weise angeschlossen und dergestalt eine Fluidverbindung zwischen den aus- und eingangsseitigen Anschlussstellen 2 bzw. 3 des Wegeventiles 36 hergestellt. Demgemäß weist die Ventileinrichtung 34 als Ganzes ein erstes Steuerventil 44 in Form des 3/2-Wegeventiles 36 auf, das in seiner betätigten Schaltstellung das Vorsteuerteil 12 mit Fluid vorgebbaren Druckes versorgt, wobei das dahingehende Steuerfluid in eine Vorsteuerkammer 46 innerhalb des Ventilgehäuses 18 gelangt, die in Blickrichtung auf die Figur gesehen an ihrem rechten Ende von einem stopfenartigen Verschlussteil 48 mediendicht verschlossen ist. Ferner weist die Ventileinrichtung 34 ein zweites Steuerventil 50 auf, das in einen Abzweig 52 geschaltet ist zwischen einem Fluidzulauf in Form der Versorgungsleitung 42 für das Vorsteuerteil 12 und einem Fluidablauf für das Lecköl aus dem Raum 16, gebildet aus einem Teilstück der Fluidleitung 30 zwischen diesem Raum 16 und einem Knotenpunkt 54, in den der Abzweig 52 einmündet. Am anderen gegenüberliegenden Ende mündet der Abzweig 52, in Form einer üblichen Fluidleitung mit dem zweiten Steuerventil 50, in einen weiteren zweiten Knotenpunkt 56 ein, in den die Versorgungsleitung 42 einmündet sowie eine Fluidverbindung 58, die zu der zweiten ausgangsseitigen Anschlussstelle 2 respektive Fluidausgangsstelle des Wegeventiles 36 führt. Das zweite Steuerventil 50 besteht aus einem weiteren federbelasteten Rückschlagventil 60, das in Richtung der Speichereinrichtung 20 schließt und in der entgegengesetzten Richtung mit dem zweiten Knotenpunkt 56 öffnet. In seiner Sperrstellung stellt das Rückschlagventil 60 sicher, dass nicht ungewollt Fluid mit vorgebbarem Druck, von der Druckversorgungseinrichtung mit dem Anschluss P stammend, in den leckölführenden Raum 16 ausgetragen wird oder auf die Fluidseite 26 des Hydrospeichers 22 gelangen kann. In seiner Öffnungsstellung hingegen und in der gezeigten weiteren Schalt- oder Betätigungsstellung des 3/2-Wegeventiles 36 kann im Hydrospeicher 22 auf der Fluidseite 26 vorhandenes Lecköl mit Hilfe der Vorspannung des Arbeitsgases 32 und Tankdruck T führend in den Vorratstank ausgeschoben werden. Ist das Ventil 36 auf Tankdruck T geschaltet, ist auch die Vorsteuerkammer 46 entlastet und das Rückschlagventil 10 befindet sich in seiner in der Figur gezeigten Sperrstellung. Insoweit verbleibt etwaig im Raum 16 vorhandenes Lecköl solange bis beim nächsten Entsperrzyklus das Öl aus dem Raum 16 in Richtung des dann entleerten Speichers 22 ausgeschoben wird, was der Fall ist, wenn das Ventil 36 mittels des Magneten 38 betätigt wird zwecks Ansteuern des Vorsteuerteils 12 zum Entsperren des Aufsteuerteils 14.

Das Vorsteuerteil 12 weist hierfür einen zylindrisch ausgebildeten Vorsteuerkolben 62 auf, der mit Druck auf einer seiner beiden Seiten beaufschlagt, hier in Form der freien Stirn- oder Kolbenseite 64, entgegen der Wirkung eines weiteren Energiespeichers in Form einer Rückstellfeder 66, über eine Betätigungsstange 68, die den leckölführenden Raum 16 im Ventilgehäuse 18 durchfährt, ein federbelastetes Schließteil 70 des Aufsteuerteils 14, insbesondere in Kugelform, von seinem Ventilsitz 72 abhebt und dabei mit seiner anderen freien Stirn- oder Kolbenseite 74 das vorhandene Lecköl im leckölführenden Raum 16 des Vorsteuerteiles 12 in Richtung der Fluidseite 26 der Speichereinrichtung 20 ausschiebt.

Während die eine Stirn- oder Kolbenseite 64 des Vorsteuerkolbens 62 als eben verlaufende Fläche ausgebildet ist, die quer zur Längsachse 76 des Rückschlagventiles 10 verläuft, ist die gegenüberliegende andere Kolben- oder Stirnseite 74 mit einer hohlzylindrischen Mittenausnehmung 78 versehen, in die die Betätigungsstange 68 mit ihrem freien, im Durchmesser breiteren Führungsteil 80 eingreift. Dieses Führungsteil 80 bildet auch einen Anlagebund für das eine freie Ende der Rückstellfeder 66 aus, die mit ihrem anderen freien Ende in Anlage ist mit einer Abstützfläche 82, die das Ende eines sich stufenweise im Querschnitt verengenden Einbauraumes für die Rückstellfeder 66 bildet. Der Vorsteuerkolben 62 ist mit seiner zylindrischen Außenumfangsfläche entlang einer hohlzylindrischen Innenumfangsfläche des Ventilgehäuses 18 geführt und weist eine Umfangsnut auf, in die ein Dichtmittel, beispielsweise in Form eines elastomeren Dichtringes 84, eingelegt ist. Insoweit dichtet der Dichtring 84 außenumfangsseitig am Vorsteuerkolben 62 den leckölführenden Raum 16 von der Vorsteuerkammer 46 des Vorsteuerteiles 12 ab. Des Weiteren wird aufgrund der Kraftwirkung der Rückstellfeder 66 die Betätigungsstange 68 in jedem Verfahrzustand des Vorsteuerkolbens 62 an diesem festgelegt, insbesondere gegen diesen kraftschlüssig gedrückt.

Der andere freie Endbereich der Betätigungsstange 68 ist in einer Führungsbuchse 86 zentral geführt, die außenumfangsseitig in eine zugehörige Ausnehmung im Ventilgehäuse 18 eingeführt ist. Dergestalt drückt die Führungsbuchse 86 im eingeschraubten Zustand mit ihrer freien Stirnseite auf einen weiteren Dichtring 88, der außenumfangsseitig an der zugehörigen Ausnehmung im Ventilgehäuse 18 anliegt und innenumfangsseitig in abdichtender Weise die Betätigungsstange 68 umfasst. Für die angesprochene Abdichtung drückt dabei die Führungsbuchse 86 den weiteren Dichtring 88 gegen einen Stützring 90, der mit seiner einen freien Stirnseite an dem weiteren Dichtring 88 anliegt und mit der anderen freien Stirnseite an einem winkelförmigen Absatz im Ventilgehäuse 18. Ferner stützt die Führungsbuchse 86 sich mit einer buchsenartigen Erweiterung 92 an einer benachbart zugehörigen Stufe im Inneren des Ventilgehäuses 18 ab. In der in der Figur gezeigten Stellung ragt die Betätigungsstange 68 mit ihrem freien Ende in Form eines Betätigungszapfens 94 aus der Führungsbuchse 86 hinaus. Der Durchmesser des Betätigungszapfens 94, auch in Form eines Flachkantes, ist jedenfalls geringer als der benachbarte Eingriffsdurchmesser einer durchgehenden Bohrung 96 in einem Ventilkolben 98, der mittels einer weiteren Rückstellfeder 100 in seiner gezeigten Schließstellung gehalten ist. Die Rückstellfeder 100 des Ventilkolbens 98 umfasst in konzentrischer Anordnung zur Längsachse 76 eine Ventilschließfeder 102 für das kugelförmige Schließteil 70, das in seiner in der Figur gezeigten Schließstellung von der Innenseite des hohlzylindrischen Ventilkolbens 98 her, dessen Mittenbohrung 96 verschließt. Der hohlzylindrische Ventilkolben 98 ist weiter längsverfahrbar in einer innenumfangsseitigen, hohlzylindrischen Führung 104 eines Abschlussstopfens 106 geführt, der mit einer Abdichtung 108 versehen entlang einer Gewindestrecke 110 im Innern des Ventilgehäuses 18 teilweise geführt ist.

In radialer Umfangsrichtung gesehen und quer zur Längsachse 76, die auch die Betätigungsachse für das gezeigte Rückschlagventil 10 darstellt, weist der Ventilkolben 98 einzelne Durchflussstellen in Form von Querbohrungen 112 auf, die diametral zur Längs- oder Betätigungsachse 76 einander gegenüberliegen, wobei in der Figur nur ein Paar solcher Querbohrungen 112 gezeigt ist, die in der Schließstellung des Ventilkolbens 98, bei der er an seiner freien Stirnseite an einem umlaufenden Ventilsitz 114 des Ventilgehäuses 18 anliegt, partiell von der Innenführung des Abschlussstopfens 106 teilweise überdeckt ist. In der dahingehend gezeigten Schließstellung des Ventilkolbens 98 trennt dieser zwei Ventilkammern 116, 118 fluid- oder mediendicht voneinander, wobei die eine erste Ventilkammer 116 von der Betätigungsstange 68 durchfahrbar ist und die andere zweite Ventilkammer 118 ist permanent fluidführend mit den durchgehenden Querbohrungen 112 im Ventilkolben 98 in Verbindung und damit mit der Innenseite des Ventilkolbens 98, der in seinem dahingehenden Inneren sowohl seine Rückstellfeder 100 als auch die Ventilschließfeder 102 für das kugelförmige Ventilschließglied 70 aufnimmt. Dabei ist bevorzugt die Rückstellfeder 100 mit einer höheren Federsteifigkeit versehen als die Ventilschließfeder 102, die sich mit ihrem anderen, der Schließkugel 70 gegenüberliegenden Ende in einer zugehörigen vertieften Federaufnahme 120 im Abschlussstopfen 106 abstützt. In jedem Fall gelangt beim Aufsteuern des Schließteiles 70 entgegen der Wirkung der Ventilschließfeder 102 über die Betätigungsstange 68 mit dem Betätigungszapfen 94 Fluid von einem Fluidanschluss 122 der ersten Ventilkammer 116 auf die Rückseite des Ventilkolbens 98 und mithin über die Querbohrungen 112 in die zweite Ventilkammer 118 mit ihrem zugehörigen Fluidanschluss 124. Sowohl Fluidanschluss 122 als auch Fluidanschluss 124, die in das Ventilgehäuse 18 entsprechend einmünden und eine Fluidverbindung zu der ersten bzw. zweiten Ventilkammer 116, 118 herstellen, sind Teil einer nicht dargestellten Fluidversorgungseinrichtung für einen hydraulischen Verbraucher, wie einen Hydromotor oder einen Arbeitszylinder und entsprechend an zugehörige Fluidleitungen (nicht dargestellt) für einen Fluidtransport angeschlossen.

Liegt nun beispielsweise am Fluidanschluss 124 der zweiten Ventilkammer 118 ein höherer Druck an als in dem Fluidanschluss 124 der ersten Ventilkammer 116 bleibt unter der Wirkung der Druckfedern 100 und 102 das Aufsteuerteil 14 geschlossen und der Fluidweg zwischen den beiden Kammern 116, 118 ist gesperrt. Liegt kein Fluiddruck an bleibt der Ventilkolben 98 aufgrund der ausschließlichen Wirkung der Federn 100, 102 jedenfalls in Anlage mit dem Ventilsitz 114 und das Rückschlagventil 10 bleibt geschlossen respektive sperrt den Fluidweg von Anschluss 122 zu Anschluss 124 und umgekehrt. Erst wenn bei gesperrtem Rückschlagventil 10 der Druck in der Kammer 116 größer ist als der Druck in der Kammer 118 zuzüglich der Rückstellkraft der Federn 100, 102, hebt der Ventilkolben 98 von seinem Ventilsitz 114 ab und gibt, auch ohne Entsperrung über das Vorsteuerteil 12 den Fluidweg zwischen den Kammern 116, 118 frei. Zum demgegenüber normal vorgesehenen Entsperren des Aufsteuerteiles 14 wird das Vorsteuerteil 12 durch Betätigen des 3/2-Wegeventiles 36 angesteuert, indem eine fluidführende Verbindung zwischen der Druckversorgungseinrichtung am Anschluss P und der Vorsteuerkammer 46 des Vorsteuerteils 12 hergestellt wird. Dies führt regelmäßig zu einer Verschiebung des Vorsteuerkolbens 62 in Blickrichtung auf die Figur gesehen von rechts nach links und das im Raum 16 befindliche Lecköl wird in Richtung der Speichereinrichtung 20 mit der Fluidseite 26 unter Vorspannen des Arbeitsgases 32 verdrängt. Bei der dahingehenden Bewegung von rechts nach links wird die Betätigungsstange 68 mitgeführt und über den Betätigungszapfen 94 die Schließkugel 70 aufgesteuert, sprich von ihrem Ventilsitz 72 abgehoben. Dergestalt gelangt dann beispielsweise Fluid unter Druck von dem ersten Fluidanschluss 122 über die erste Ventilkammer 116 und an dem Betätigungszapfen 94 vorbei in die Bohrung 96 des Ventilkolbens 98 hinein und von dort aus weiter auf dessen Rückseite bei abgehobener Ventilkugel 70. Von dort setzt sich der Fluidstrom über die Querbohrungen 112 in die zweite Ventilkammer 118 des Aufsteuerteils 14 fort und gelangt über den zweiten Fluidanschluss 124 der zweiten Ventilkammer 118 zu einem nicht dargestellten Verbraucher üblicher Bauart. Die dahingehende Funktionsweise setzt voraus, dass der Fluiddruck in der ersten Ventilkammer 116 jedenfalls größer ist als der Fluiddruck in der zweiten Ventilkammer 118 in Verbindung mit der Kraft der Rückstellfeder 100, die den Ventilkolben 98 in seiner in der Figur gezeigten Schließstellung zu halten sucht. Bei entsperrtem Ventilkolben 98 ist in Abhängigkeit der an ihm ausstehenden Drücke auch eine Durchströmung in umgekehrter Richtung von Kammer 118 zu Kammer 116 möglich, beispielsweise um einen hydraulisch betätigten Arbeitszylinder in seine Ausgangsstellung rückstellen zu können. Ist der Vorsteuerkolben 62 vollständig in seine Betätigungsstellung ausgelenkt, kann die freie Stirnseite der Betätigungsstange 68, von der sich der Zapfen 94 in Richtung der Bohrung 96 wegerstreckt, in Anlage mit der freien vorderen Stirnseite des Ventilkolbens 98 kommen und diesen zusätzlich vom zugehörigen Ventilsitz 114 in eine geöffnete Stellung wegbewegen.

Entfällt die Aufsteuerung durch das Vorsteuerteil 12 bei Drucklosmachen der Vorsteuerkammer 46 stellt jedenfalls die Rückstellfeder 66 den Vorsteuerkolben 62 wieder in seine in der Figur gezeigte Ausgangsstellung zurück bei gleichzeitiger Mitnahme der Betätigungsstange 68 über die Rückstellkraft der Rückstellfeder 66, die auf den Vorsteuerkolben 62 übertragen wird. Ist die Rückstellkraft der Ventilschließfeder 102 dann jedenfalls größer als der noch anstehende Fluiddruck in der ersten Ventilkammer 116 wird die Bohrung 96 im Ventilkolben 98 von der Kugel 70 zugesteuert und der Ventilkolben 98 kann wiederum seine Schließstellung einnehmen, wenn insgesamt der Schließdruck auf seiner Rückseite größer ist als der Aufsteuerdruck in der ersten Ventilkammer 116. Das Rückschlagventil 10 steht dann wieder für einen Entsperrvorgang bereit.

## Patentansprüche

1. Rückschlagventil, insbesondere entsperrbares Rückschlagventil (10), mit einem Vorsteuerteil (12) und mit einem Aufsteuerteil (14), das von dem Vorsteuerteil (12) aufsteuerbar ist, **dadurch gekennzeichnet, dass** mindestens ein leckölführender Raum (16) auf Seiten des Vorsteuerteils (12) fluidführend an eine Speichereinrichtung (20) anschließbar ist, die eine vorgebbare Menge an Lecköl aufnimmt, das im Betrieb entsteht.

2. Rückschlagventil nach Anspruch 1, **dadurch gekennzeichnet, dass** das Vorsteuerteil (12) von dem Aufsteuerteil (14) mittels einer Dichteinrichtung (88) fluiddicht separiert ist, und dass die Fluidanschlüsse (122, 124) einer Fluidführung für das Aufsteuerteil (14) von einer weiteren Fluidführung mit einer Fluidleitung (30) separiert sind, die den leckölführenden Raum (16) des Vorsteuerteils (12) mit der Speichereinrichtung (20) fluidführend verbindet.

3. Rückschlagventil nach Anspruch 1 oder 2, **dadurch gekennzeichnet, dass** der leckölführende Raum (16) von einer Betätigungsstange (68) durchgriffen ist, die in Anlage mit der Dichteinrichtung (88) ist und die an ihren freien Stirnseiten mit dem Aufsteuerteil (14) zusammenwirkt sowie mit einem Vorsteuerkolben (62) des Vorsteuerteils (12).

4. Rückschlagventil nach einem der vorstehenden Ansprüche, **dadurch gekennzeichnet, dass** der leckölführende Raum (16) in Abhängigkeit von der jeweiligen Zustellbewegung des Vorsteuerkolbens (62) vom Volumen her veränderlich ist und außenumfangsseitig von einem Ventilgehäuse (18) umfasst ist, in dem der Ventilkolben (62) nebst der Betätigungsstange (68) längsverfahrbar geführt sind.

5. Rückschlagventil nach einem der vorstehenden Ansprüche, **dadurch gekennzeichnet, dass** die Fluidleitung (30) derart an den leckölführenden Raum (16) angeschlossen ist, dass in jeder Verfahrstellung des Vorsteuerkolbens (62) permanent eine Fluidverbindung zwischen dem leckölführenden Raum (16) und der Speichereinrichtung (20) besteht.

6. Rückschlagventil nach einem der vorstehenden Ansprüche, **dadurch gekennzeichnet, dass** die Speichereinrichtung (20) aus mindestens einem Hydrospeicher (22) gebildet ist, der ein Trennelement (24) aufweist, das eine Fluidseite (26) mit dem Lecköl von einer Energiespeicherseite (28) separiert.

7. Rückschlagventil nach einem der vorstehenden Ansprüche, **dadurch gekennzeichnet, dass** der Energiespeicher eine mechanische Feder und/oder eine Gasfeder ist, insbesondere in Form eines im Hydrospeicher (22) auf seiner Energiespeicherseite (28) vorgespannten Arbeitsgases (38).

8. Rückschlagventil nach einem der vorstehenden Ansprüche, **dadurch gekennzeichnet, dass** die Steifigkeit der jeweils zum Einsatz kommenden Feder gering gewählt ist.

9. Rückschlagventil nach einem der vorstehenden Ansprüche, **dadurch gekennzeichnet dass** die Fluidseite (26) der Speichereinrichtung (20) mittels einer Ventileinrichtung (34) auf Tankdruck (T) schaltbar ist, insbesondere zum Entleeren des Lecköls auf der Fluidseite (26) der Speichereinrichtung (20) in Richtung eines Vorratstanks.

10. Rückschlagventil nach einem der vorstehenden Ansprüche, **dadurch gekennzeichnet, dass** die Ventileinrichtung (34) ein erstes Steuerventil (44), insbesondere in Form eines 3/2-Wegeventiles (36), aufweist, das in einer Schaltstellung das Vorsteuerteil (12) mit Fluid vorgebbaren Druckes versorgt und in einer weiteren Schaltstellung den Leckölfluss zum Vorratstank herstellt, sobald ein zweites Steuerventil (50), insbesondere in Form eines in Richtung des ersten Steuerventils (44) öffnenden, federbelasteten weiteren Rückschlagventils, in seine geöffnete Stellung gelangt.

11. Rückschlagventil nach einem der vorstehenden Ansprüche **dadurch gekennzeichnet, dass** das zweite Steuerventil (50) in einen Abzweig (52) geschaltet ist zwischen einem Fluidzulauf (42) für das Vorsteuerteil (12) und einem Fluidablauf (30) für das Lecköl.

12. Rückschlagventil nach einem der vorstehenden Ansprüche **dadurch gekennzeichnet, dass** das Vorsteuerteil (12) einen Vorsteuerkolben (62) aufweist, der mit Druck auf einer (64) seiner beiden Seiten beaufschlagt entgegen der Wirkung eines weiteren Energiespeichers, insbesondere einer Rückstellfeder (66), über eine Betätigungsstange (68), die den leckölführenden Raum (16) im Ventilgehäuse (18) durchfährt, ein federbelastetes Schließteil (70) des Aufsteuerteils (14), insbesondere in Kugelform, von seinem Ventilsitz (72) abhebt und dabei mit seiner anderen Seite (74) das vorhandene Lecköl im leckölführenden Raum (16) des Vorsteuerteils (12) in Richtung der Fluidseite (26) der Speichereinrichtung (20) ausschiebt.

13. Rückschlagventil nach einem der vorstehenden Ansprüche **dadurch gekennzeichnet, dass** mit Abheben des Schließteiles (70) von seinem Ventilsitz (72) ein in einer Ventilkammer (116) des Aufsteuerteiles (14) mit der Betätigungsstange (68) vorhandener Fluiddruck auf die Rückseite eines Ventilkolbens (98) gelangt, der das federbelastete Schließteil (70) aufnimmt und der entgegen der Rückstellkraft eines zusätzlichen Energiespeichers, insbesondere in Form einer weiteren Rückstell- oder Ventilschließfeder (102), in seine Freigabestellung gebracht den Fluidweg von einem Fluidanschluss (122), der in die eine Ventilkammer (116) ausmündet, zu einem weiteren Fluidanschluss (124) freigibt, der in eine weitere Ventilkammer (118) des Aufsteuerteils (14) ausmündet.

14. Rückschlagventil nach einem der vorstehenden Ansprüche **dadurch gekennzeichnet, dass** die Betätigungsstange (68) innerhalb des Ventilgehäuses (18) in einer Führungsbuchse (86) geführt ist, die den leckölführenden Raum (16) von der einen Ventilkammer (116) des Aufsteuerteils (14) in abgedichteter Weise trennt, die an den einen Fluidanschluss (122) angeschlossen ist.
